# FASCICULE DE BREVET EUROPEEN

(11) **EP 0 623 897 B1**
(45) Date de publication et mention de la délivrance du brevet: **28.07.1999**
(21) Numéro de dépôt: 94400718.6
(22) Date de dépôt: 01.04.1994
(51) Int. Cl.: G06K 19/077

(54) **Objet portatif à circuit intégré et procédé de fabrication**
Tragbarer Gegenstand mit integrierter Schaltung und Verfahren zur Herstellung
Portable object comprising an integrated circuit and method for manufacturing

(30) Priorité: 06.04.1993 FR 9304072
(43) Date de publication de la demande: 09.11.1994
(73) Titulaire: GILLES LEROUX S.A., F-45470 Loury (FR)
(72) Inventeur: Leroux, Gilles, F-45470 Trainou (FR); Ormerod, Simon, F-45470 Loury (FR)
(74) Mandataire: Debay, Yves

(56) Documents cités:
- EP-A- 0 469 970
- FR-A- 2 538 930
- FR-A- 2 625 350

## Description

La présente invention concerne un objet portatif et le procédé de fabrication d'un tel objet.

Il est connu des procédés de fabrication d'objets portatifs, tels que des cartes à micro-circuit, dans lesquels l'ensemble pastille-circuit intégré formant ce que l'homme de métier appelle un bouton ou un micromodule est disposé dans un logement obtenu par l'assemblage de plusieurs couches de feuilles plastiques, dont l'une est découpée aux dimensions de la pastille et au moins une autre couche aux dimensions du circuit intégré. Les différentes feuilles sont ensuite solidarisées entre elles avant la mise en place du micromodule à l'aide d'une résine ou d'une colle dans la cavité ainsi constituée. Ce procédé est onéreux car il comporte de nombreuses étapes.

Un autre procédé consiste à déformer à chaud une feuille de matière plastique d'épaisseur plus importante et d'y insérer l'ensemble bouton. Ce deuxième procédé est préjudiciable pour le semi-conducteur du micromodule qui est porté à une température parfois trop élevée alors que le premier processus qui donne un résultat de bonne qualité a l'inconvénient d'être trop onéreux.

Enfin, le dernier processus bon marché consiste à fraiser dans une feuille en matière plastique d'épaisseur suffisante un logement destiné à accueillir le bouton et ensuite à le fixer dans ce logement à l'aide d'une résine. Toutefois, dans ce procédé, l'espace disponible entre le bouton et la cavité est important et la quantité de colle à utiliser est non négligeable. L'état de surface de la carte qui résulte de l'utilisation de ce procédé est relativement mauvais.

Un premier but de l'invention est donc de proposer un objet portatif dont l'état de surface, au niveau de la zone entre la pastille de contact et la carte soit d'une qualité supérieure et nécessite l'utilisation d'une quantité moindre de colle.

Ce but est atteint par le fait que l'objet portatif comporte dans un support en matière plastique une cavité destinée à recevoir un ensemble micromodule comportant une pastille conductrice comportant des zones isolées électriquement les unes des autres et à laquelle est relié électriquement un circuit intégré à semiconducteur comportant au moins une fonction de mémorisation est caractérisé en ce que la cavité a un contour conformé en une succession d'arcs jointifs de faible amplitude par rapport à une ligne moyenne de contour de forme adaptée à la forme de la pastille, ledit contour de la cavité formant une dépouille de 10 degrés par rapport à une direction perpendiculaire à la surface du support, cette dépouille élargissant la cavité vers le fond.

Selon une autre particularité, la cavité comporte deux évidements concentriques ou non dont un premier de surface plus grande que le second est de profondeur plus faible que le second.

Selon une autre particularité, le premier évidement a une profondeur inférieure à la somme de l'épaisseur de la pastille conductrice et de l'épaisseur du ruban thermofusible associé à la pastille conductrice.

Selon une autre particularité, l'angle de dépouille et la profondeur du premier évidement sont calculés pour absorber le volume de colle thermofusible correspondant à la différence de dimension entre la profondeur du premier évidement et l'épaisseur de l'ensemble pastille-ruban thermofusible.

Selon une autre particularité, la profondeur est inférieure de 0,05 à 2 centièmes de millimètres.

Selon une autre particularité, la profondeur est inférieure de 2 centièmes de millimètre.

Selon une autre particularité, le circuit intégré est fixé dans le second évidement par une colle à prise semi-rapide chargée d'élastomère.

Selon une autre particularité, la colle est du type cyanoacrylique.

Selon une autre particularité, la colle est une résine.

Selon une autre particularité, la pastille est fixée dans un premier logement par une colle thermofusible.

Selon une autre particularité, les extrémités des arcs définissent un contour dont les dimensions sont, par rapport aux dimensions de la ligne moyenne de contour, diminuées d'une valeur comprise entre 1/1000 ème et 10/1000ème .

Selon une autre particularité, les dimensions sont diminuées de préférence de 3/1000 ème.

Un autre objet de l'invention est de proposer un procédé de fabrication des objets portatifs selon le premier but.

Ce but est atteint par le fait que le procédé de fabrication des objets portatifs comporte :
- une étape de mesure, à l'aide d'un faisceau laser, de l'épaisseur de matière formant le support de la carte dans laquelle une cavité doit être creusée pour recevoir l'ensemble micromodule ;
- une étape de calcul de la distance de la descente d'une broche de fraiseuse par rapport à un plan fixe constitué par la surface supérieure du support formant la carte ;
- une étape de commande des déplacements d'une fraise en queue d'aronde, dont la queue d'aronde correspond à l'angle de la dépouille de la cavité, pour former le contour conformé en une succession d'arcs jointifs ;
- une étape de collage de l'ensemble micromodule sur le support.

Selon une autre particularité, l'étape de collage comporte une étape de dépôt d'une quantité définie de colle à prise semi-rapide dans le deuxième évidement de la cavité pour assurer la fixation du circuit intégré à un semi-conducteur de l'ensemble micromodule.

Selon une autre particularité, l'étape de collage comporte en outre une étape de chauffage de la pastille conductrice comportant des zones isolées électriquement l'une de l'autre et pourvue d'un ruban thermofusible dans une partie entourant le semi-conducteur.

Selon une autre particularité, le procédé comporte préalablement à la fixation du circuit intégré à semi-conducteur une étape de dépôt d'un ruban thermofusible, pourvu de découpes d'une taille suffisante pour entourer le semi-conducteur, sur le ruban conducteur qui comporte une succession de pastilles conductrices découpées dont chacune est reliée électriquement à un semi-conducteur et une étape de séparation de l'ensemble micromodule pour mise en place dans la cavité du support.

Selon une autre particularité, l'étape de séparation de l'ensemble micromodule est effectuée à l'aide d'un poinçon à surface bombée coopérant avec une matrice dont l'ouverture est obstruée par une coupelle de réception (81) destinée à recevoir le micromodule déformé mécaniquement.

Selon une autre particularité, l'ensemble micromodule positionné sur une coupelle est amené à un poste de mise en place dans la cavité du support pour, par action du poussoir, assurer la descente du micromodule dans la cavité disposée en vis-à-vis de la concavité de la coupelle de dimension inférieure à la dimension du contour du logement prévu dans le support (2).

D'autres particularités et avantages de la présente invention apparaîtront plus clairement à la lecture de la description ci-après faite en référence aux dessins annexés dans lesquels :
- la figure 1A représente une vue de dessus de la cavité formée dans le support de l'objet portatif ;
- la figure 1B représente une vue en coupe de cette même cavité formée dans le support de l'objet portatif ;
- la figure 1C représente une particularité du contour de la cavité ;
- la figure 1D représente une vue de côté d'un micromodule destiné à être encastré dans la cavité ;
- la figure 2A représente une vue de côté d'un premier poste permettant la mise en oeuvre d'une partie des étapes du procédé ;
- la figure 2B représente une vue de côté d'un deuxième poste permettant la mise en oeuvre des autres étapes du procédé ;
- la figure 3A représente une vue en coupe d'un troisième poste permettant la mise en oeuvre d'une variante du procédé ;
- la figure 3B représente une vue en coupe d'un quatrième poste permettant la mise en oeuvre du procédé.

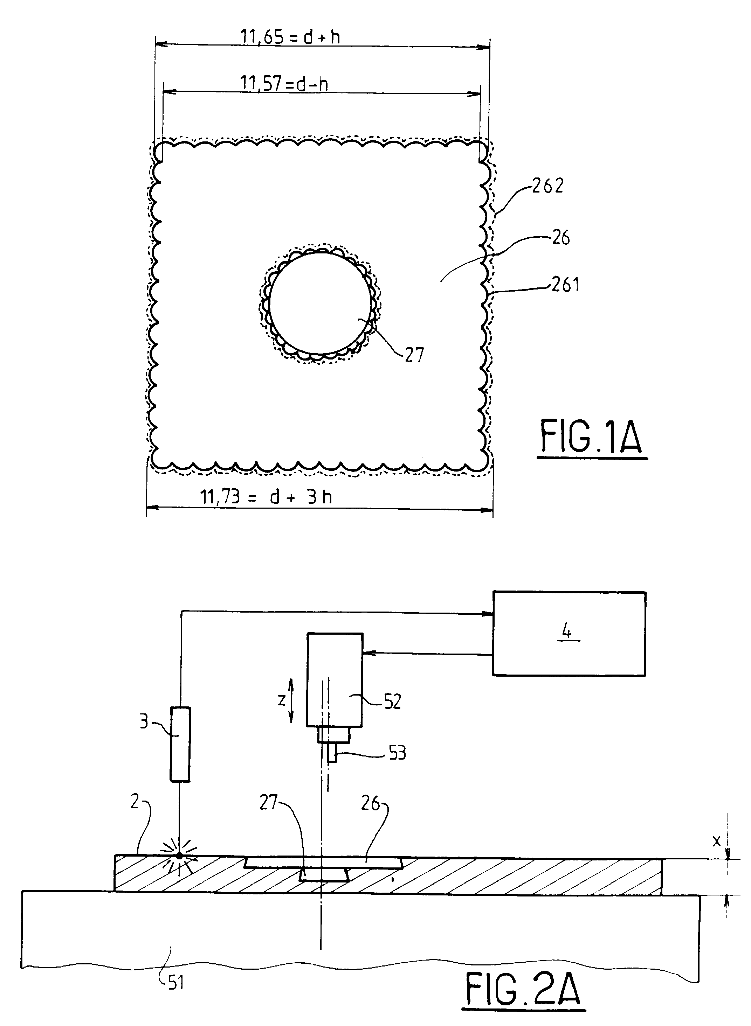

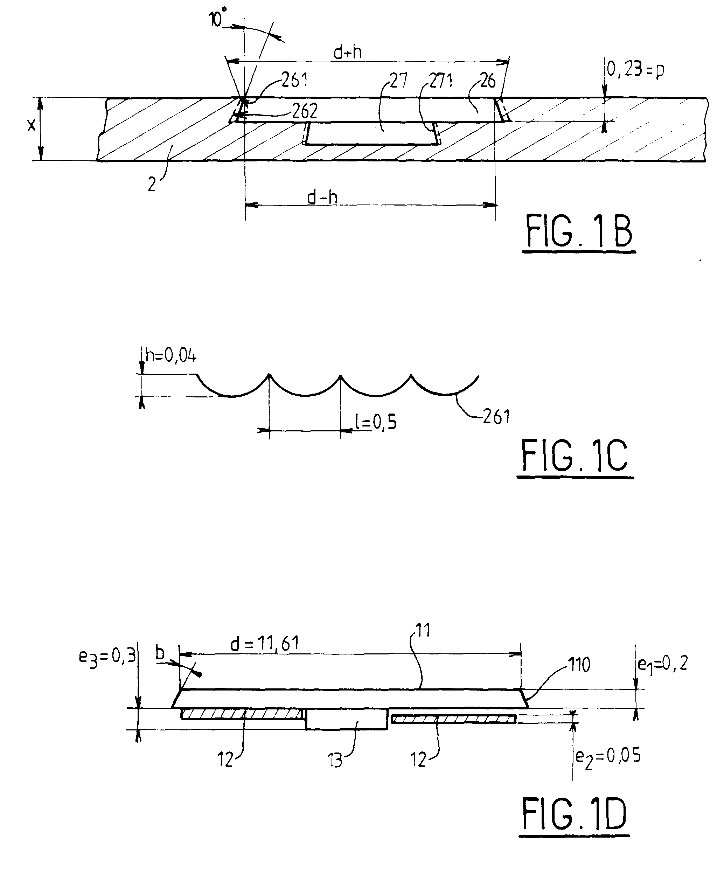

La figure 1A représente une vue du dessus du contour (261) d'une cavité formée dans un support en matière plastique, ce contour du bord (261) de la cavité est formé d'une succession d'arcs jointifs définissant ainsi une ligne moyenne de contours dont la forme correspond sur la figure 1 à celle d'un carré. Ces arcs jointifs ont une hauteur h = 0,04 mm et une longueur 1 = 0,5 mm, comme représenté sur la figure 1C. Sur la figure 1B, on peut voir que le bord supérieur formé sur un côté du contour (261) est disposé, par rapport au bord supérieur du contour situé en vis-à-vis, à une distance d - h = 11,57 mm, ce qui correspond à la dimension (d = 11,61 mm) de la pastille conductrice (11), comme représenté à la figure 1D, et diminuée de la hauteur (h) de l'arc. Le fond d'un premier évidement (26 ) formant la cavité est disposé en retrait par rapport au bord supérieur (261) de cette cavité et de façon à former un angle de dépouille de 10° par rapport à la surface supérieure de la feuille de matériau plastique (2) formant le support de l'objet portatif. Un deuxième évidement (27) complète la cavité, ce deuxième évidement est concentrique ou non par rapport au premier, de surface plus petite et de profondeur plus importante que le premier évidement (26). Ce deuxième évidement (27) comporte également un contour formé d'une succession d'arcs de cercle de façon à définir une ligne de contour (271) dont le bord supérieur est décalé par rapport au fond de l'évidement pour former une dépouille d'un angle de 10°. Le sommet des arcs d'un bord supérieur du premier évidement (26) est disposé par rapport au sommet des arcs de l'autre bord supérieur du premier évidement à une distance (d + h) correspondant à la largeur (d) de la pastille augmentée de la hauteur (h) d'un arc. Enfin, au niveau du fond du premier évidement (26), la distance entre les sommets des arcs des lignes de contour opposées correspond à la largeur (d) de la pastille augmentée de 3 fois la hauteur (h) d'un arc. La profondeur (p) du premier évidement (26) est inférieure à l'épaisseur de l'ensemble pastille conductrice (11) ruban thermofusible (12) d'une valeur qui correspond à 3/1000 ème de la somme de ces épaisseurs (e₁, respectivement e₂). La conformation particulière des bords (26) de la cavité permet de réaliser un phénomène de clipsage sur les bords (110) de la pastille (11) et les espaces libres entre le bord (110) de la pastille (11) et les arcs délimitant le fond du premier évidement (26) de la cavité permet d'absorber le surplus de colle thermofusible lorsque la surface supérieure de la pastille (11) est amenée par chauffage dans le plan de la surface supérieure de la partie en matière plastique (2) formant le support de la carte.

Dans une variante avantageuse, les bords (110) de la pastille forment un biais dont l'angle (b) avec une perpendiculaire à la surface des contacts est au plus égal à l'angle de dépouille des évidements (26, 27).

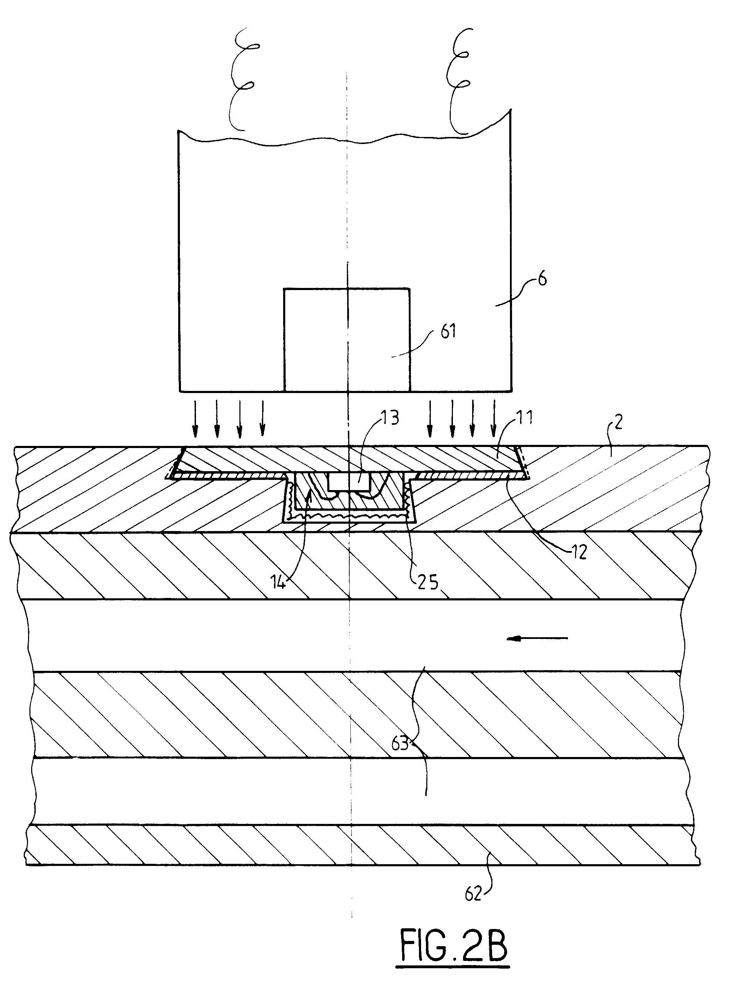

L'objet portatif, décrit en liaison avec les figures 1A à 1D est fabriqué par le procédé explicité à l'aide des figures 2A et 2B. Ce procédé comporte une première étape mise en oeuvre sur le dispositif représenté à la figure 2A qui consiste à mesurer l'épaisseur du support (2) formant la carte à l'aide d'un laser (3) qui communique les informations de mesure à un dispositif de commande numérique (4) pour commander en conséquence le déplacement de la tête de fraisage (52) au bout de laquelle est placée une fraise (53) en queue d'aronde dont la dépouille forme un angle de 10° par rapport à la verticale. Le déplacement vertical de la fraise (z) est commandé par la commande numérique (4) en fonction de la mesure de l'épaisseur (x) effectuée par le laser (3) pour que la profondeur (p) du premier évidement (26) de la cavité corresponde exactement à la profondeur souhaitée d'une part et d'autre part que les dimensions du contour du premier évidement de la cavité correspondent également aux valeurs souhaitées. Ensuite la commande numérique (4) commande le déplacement de la tête de fraisage (52) pour réaliser le deuxième évidement (27). Une fois cette opération effectuée, le support (2) formant une carte est amené à un deuxième poste représenté à la figure 2B, après avoir été pourvu à un poste intermédiaire d'un ensemble micromodule (11, 12, 13) formé d'une pastille (11) conductrice, comportant des zones isolées électriquement et des zones conductrices d'un semi-conducteur (13) et d'un ruban (12). Sur la pastille (11) est monté un composant électronique à semi-conducteur (13) qui est lui-même relié électriquement aux différentes zones conductrices de cette pastille conductrice, comme cela est connu de l'homme de métier. Un ruban thermofusible (12) comportant à l'emplacement correspondant à celui du semi-conducteur (13) un orifice dégageant le passage pour le semiconducteur est disposé sur chaque pastille (11).

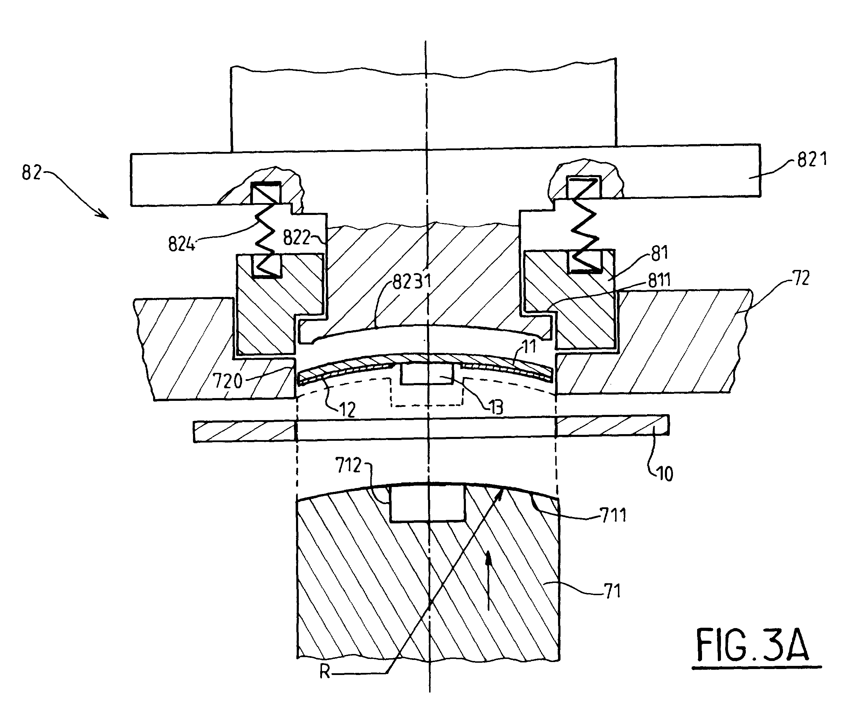

Le micromodule (11, 12, 13) est préparé à partir d'un ruban (10) comportant les zones conductrices et des zones isolées électriquement et sur lequel on aura placé des semi-conducteurs (13) et le ruban thermofusible (12). Ce ruban (10) sera découpé en micromodule par des découpes à des pas réguliers effectués par un poinçon (71) dont la face avant comporte un évidement (712) pour éviter l'écrasement du semi-conducteur (13) et forme une surface bombée (711), de préférence soit cylindrique, soit en forme de calotte sphérique. Ce poinçon en rencontrant le ruban (10) va déformer celui-ci et l'amener en appui sur la matrice (72) de l'outil de découpe pour découper le micromodule (11, 12, 13) représenté en trait plein sur la figure 3A. L'avancement du poinçon (71) poussera le micromodule dans une coupelle d'accueil (81) située de l'autre côté de la matrice (72) et dans laquelle est monté un poussoir constitué d'un plateau (821) d'une partie cylindrique (822) et d'une surface concave (8231) formée sur une rondelle (823) disposée à l'extrémité inférieure du cylindre (822), de façon que la rondelle (823) appuie sur les épaulements (811) de la coupelle d'accueil lorsque les ressorts (824) se détendent. Le poinçon (71) à surface sphérique de rayon (R) ou à surface cylindrique de même rayon permet d'obtenir des micromodules comportant, selon la variante de la figure 1D un bord (110) en biais. Ce micromodule (11, 12, 13) sera maintenu dans la coupelle d'accueil (81) en subissant une déformation mécanique qui lui donne un bombage, comme représenté sur la figure 3A.

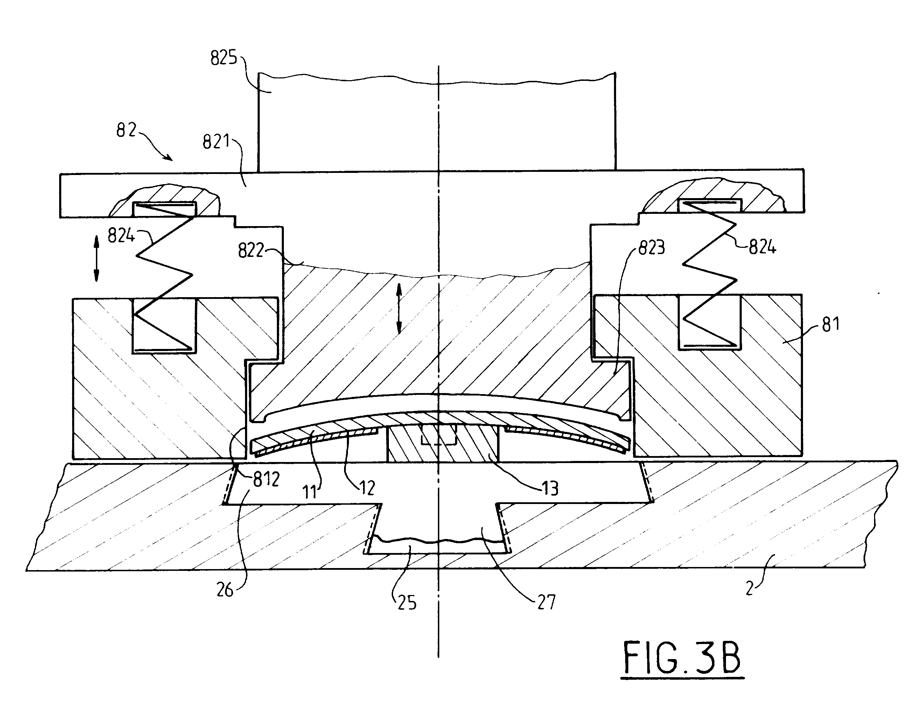

L'ensemble coupelle d'accueil (81) - outil poussoir (82), micromodule (11, 12, 13) pincé dans la coupelle d'accueil (81) est ensuite amené à un quatrième poste, représenté à la figure 3B. A ce quatrième poste, un élément de support (2) pré-découpé en forme de carte et dans lequel ont été pratiquées les cavités (26, 27) est placé en vis-à-vis de la coupelle (81) et de l'outil poussoir (82). Cet outil poussoir (82) est actionné vers le bas par une tige descendante (825) qui provoque le déplacement du poussoir concave (823) assurant ainsi la descente du micromodule dans le logement (26, 27). Sur la figure 3B, on peut réaliser que la distance séparant les parois verticales (812) de la coupelle (81) est inférieure aux dimensions du premier évidement (26) pratiqué dans le support (2) de la carte, de façon à permettre une mise en place facile du micromodule dans son logement assurant ainsi l'auto-centrage de ce dernier dans l'évidement (26) lorsque le micromodule redevient naturellement plan après être sorti de la coupelle (81). Cette mise en place du micromodule (11, 12, 13) permet d'éviter d'avoir à positionner le logement précis réalisé au préalable sur la machine de fraisage avec une très grande précision sous l'outil d'encartage pour conserver une grande qualité d'encartage. En outre, l'utilisation d'un poinçon bombé permet d'obtenir des bords (110) en biais, comme représenté à la figure 1D.

Dans une variante de réalisation, on pourrait envisager d'utiliser un poinçon à face avant plane (711) avec l'évidement (712) et de découper le micromodule avec une matrice (72) dont la dimension correspond à celle du premier évidement (26) au voisinage de la surface de découpe et dont les surfaces internes (720) auraient une conicité permettant d'amener progressivement le micromodule par déformation aux dimensions de la coupelle (81) de transport du micromodule au poste suivant. Dans ce cas, les bords des micromodules ne comporteraient pas de biais.

Avant la mise en place du bouton ou du module ainsi formé, la machine de fabrication aura déposé au préalable une goutte de colle (25), constituée soit d'une résine, soit d'une colle cyanoacrylique pour effectuer une fixation semi-rapide du circuit intégré dans le logement (27) de la carte (2). Puis, au poste de la figure 2B, la carte est positionnée sur un support (62) de référence, qui comporte dans la zone correspondant à l'emplacement du micromodule (11, 12, 13) une canalisation (63) d'air de refroidissement formée dans le support (62). En face de ce support référencé (62) est disposée une tête (6) comportant des électrodes chauffantes paramétrables. Cette tête (6) est elle-même pourvue en son centre d'un logement (61) rempli de matière non conductrice de la chaleur de façon à éviter un échauffement de la zone centrale du micromodule correspondant à celle où est situé au verso le circuit intégré. La tête chauffante (6) est descendue puis appliquée avec une certaine pression sur l'ensemble micromodule pour, d'une part effectuer la fusion du ruban thermofusible (12) et d'autre part, par la pression, provoquer l'évacuation du surplus de colle thermofusible en direction des arcs de la cavité.

L'avantage du procédé est que l'ensemble bouton mis en place dans la cavité ne risque pas de s'échapper de celle-ci lors d'un transfert rapide et brutal d'un poste de travail à un autre poste, par exemple, du poste de mise en place du micromodule, vers le poste de pressage suivant.

Le procédé permet également de maintenir la puce par clipsage afin, d'une part d'améliorer la présentation de l'encartage et, d'autre part, d'utiliser d'autres moyens de collage que ceux actuellement utilisés.

Grâce à cet effet de clipsage, on n'est pas tenu d'utiliser des colles à prise rapide (2 à 20 secondes) offrant des résistances au cisaillement sur acier de 14 à 22 MPA moins performantes que celles à prise semi-rapide (10 secondes à 2 minutes) résistantes au pelage, aux chocs et chargées d'élastomère, offrant des caractéristiques de souplesse de résilience et une résistance au cisaillement sur acier de 22 à 30 MPA. Cette qualité de colle peut s'appliquer également au collage de la pastille.

Par ailleurs, ce procédé a l'avantage de permettre de constituer un réservoir naturel du surplus de colle pour éviter une opération d'ébavurage et d'assurer aussi un meilleur accrochage de la puce sur le support grâce à cette denture qui en définitive ressemble à un moletage droit. La contre-dépouille offre également l'avantage, une fois la colle durcie, de ne permettre l'arrachage du micromodule ou de la puce qu'en brisant la carte.

Il est bien évident que l'invention a été représentée avec une cavité ayant un contour moyen de forme carrée mais qu'elle s'applique également pour toutes les lignes moyennes de contour de forme rectangulaire, ronde, oblongue et pour toutes épaisseurs de pastille et de ruban thermofusible.

## Revendications

1. Objet portatif comportant dans un support (2) en matière plastique une cavité (26, 27) destinée à recevoir un ensemble micromodule comportant une pastille conductrice (11) comportant des zones isolées électriquement les unes des autres et à laquelle est relié électriquement un circuit intégré (13) à semiconducteur comportant au moins une fonction de mémorisation, caractérisé en ce que la cavité (26, 27) a un contour (261, 271) conformé en une succession d'arcs jointifs de faible amplitude par rapport à une ligne moyenne de contour de forme adaptée à la forme de la pastille, ledit contour de la cavité formant une dépouille de 10 degrés par rapport à une direction perpendiculaire à la surface du support (2), cette dépouille élargissant la cavité vers le fond.

2. Objet portatif selon la revendication 1, caractérisé en ce que la cavité (26, 27) comporte deux évidements concentriques ou non dont un premier (26) de surface plus grande que le second est de profondeur plus faible que le second.

3. Objet portatif selon la revendication 1 ou 2, caractérisé en ce que le premier évidement (26) a une profondeur (P) inférieure à la somme de l'épaisseur (e₁) de la pastille conductrice (11) et de l'épaisseur (e₂) du ruban thermofusible (12) associé à la pastille conductrice.

4. Objet portatif selon la revendication 1 ou 2, caractérisé en ce que l'angle de dépouille et la profondeur (P) du premier évidement (26) sont calculés pour absorber le volume de colle thermofusible correspondant à la différence de dimension entre la profondeur (P) du premier évidement et l'épaisseur (e₁ + e₂) de l'ensemble pastille-ruban thermofusible (11, 12).

5. Objet portatif selon la revendication 3 ou 4, caractérisé en ce que la profondeur (P) est inférieure de 0,05 à 2 centièmes de millimètres.

6. Objet portatif selon la revendication 3 ou 4, caractérisé en ce que la profondeur (P) est inférieure de 2 centièmes de millimètre.

7. Objet portatif selon une des revendications précédentes, caractérisé en ce que le circuit intégré (13) est fixé dans le second évidement (27) par une colle à prise semi-rapide chargée d'élastomère.

8. Objet portatif selon la revendication 7, caractérisé en ce que la colle est du type cyanoacrylique.

9. Objet portatif selon la revendication 7, caractérisé en ce que la colle est une résine.

10. Objet portatif selon la revendication 1, caractérisé en ce que la pastille (11) est fixée dans un premier logement (26) par une colle thermofusible.

11. Objet portatif selon la revendication 1, caractérisé en ce que les extrémités des arcs définissent un contour dont les dimensions, par rapport aux dimensions de la ligne moyenne de contour sont diminuées d'une valeur comprise entre 1/1000 ème et 10/1000ème.

12. Objet portatif selon la revendication 11, caractérisé en ce que les dimensions sont diminuées de préférence de 3/1000 ème.

13. Procédé de fabrication des objets portatifs selon une des revendications précédentes, caractérisé en ce qu'il comporte :
- une étape de mesure à l'aide d'un faisceau laser de l'épaisseur de matière formant le support (2) de la carte dans laquelle une cavité (26, 27) doit être creusée pour recevoir l'ensemble micromodule (11, 12, 13);
- une étape de calcul de la distance de descente d'une broche (52) de fraiseuse par rapport à un plan fixe constitué par la surface supérieure du support (2) formant la carte ;
- une étape de commande des déplacements d'une fraise (53) en queue d'aronde, dont la queue d'aronde correspond à l'angle de la dépouille de la cavité (26, 27), pour former le contour (261, 271) conformé en une succession d'arcs jointifs ;
- une étape de collage de l'ensemble micromodule (11, 12, 13) sur le support (2).

14. Procédé selon la revendication 13, caractérisé en ce que l'étape de collage comporte une étape de dépôt d'une quantité définie de colle à prise semi-rapide dans le deuxième évidement (27) de la cavité pour assurer la fixation du circuit intégré à semi conducteur (13) de l'ensemble micromodule.

15. Procédé selon la revendication 13 ou 14, caractérisé en ce que l'étape de collage comporte en outre une étape de chauffage de la pastille conductrice (11) comportant des zones isolées électriquement l'une de l'autre et pourvue d'un ruban thermofusible (12) dans une partie entourant le semi-conducteur (13).

16. Procédé selon une des revendications 13 à 15, caractérisé en ce qu'il comporte préalablement à la fixation du circuit intégré à semi-conducteur (13) une étape de dépôt d'un ruban thermofusible (12), pourvu de découpes de taille suffisante pour entourer le semiconducteur (13) sur le ruban conducteur qui comporte une succession de pastilles (11) conductrices découpées dont chacune est reliée électriquement à un semi-conducteur et une étape de séparation de l'ensemble micromodule pour mise en place dans la cavité du support (2).

17. Procédé selon la revendication 16, caractérisé en ce que l'étape de séparation de l'ensemble micromodule (11, 12, 13) est effectuée à l'aide d'un poinçon à surface bombée coopérant avec une matrice dont l'ouverture est obstruée par une coupelle de réception (81) destinée à recevoir le micromodule déformé mécaniquement.

18. Procédé selon une des revendications 16 ou 17, caractérisé en ce que l'ensemble micromodule positionné sur une coupelle (81) est amené à un poste de mise en place dans la cavité (26, 27) du support (2) pour, par action du poussoir (82), assurer la descente du micromodule dans la cavité disposée en vis-à-vis de la concavité de la coupelle de dimension inférieure à la dimension du contour du logement prévu dans le support (2).

## Patentansprüche

1. Tragbarer Gegenstand, der in einem Kunststoffträger (2) eine Vertiefung (26, 27) zur Aufnahme einer Mikromodul-Baugruppe aufweist, die ein leitendes Substrat (11) mit voneinander elektrisch isolierten Bereichen enthält, mit welchem eine integrierte Halbleiterschaltung (13) elektrisch verbunden ist, die mindestens eine Speicherfunktion enthält, dadurch gekennzeichnet, daß die Vertiefung (26, 27) eine Kontur (261, 271) aufweist, die aus einer Aufeinanderfolge von aneinanderstoßenden Bögen gestaltet ist, die in bezug auf eine durchschnittliche Konturenlinie, deren Form an die Form des Substrats angepaßt ist, eine kleine Amplitude haben, wobei die Kontur der Vertiefung einen Freiwinkel von 10° bezüglich einer zur Oberfläche des Trägers (2) senkrechten Richtung bildet, wobei dieser Freiwinkel die Vertiefung zum Grund hin erweitert.

2. Tragbarer Gegenstand nach Anspruch 1, dadurch gekennzeichnet, daß die Vertiefung (26, 27) zwei Ausnehmungen aufweist, die zueinander konzentrisch sind oder nicht, wobei eine erste (26) mit einer größeren Fläche als die zweite eine geringere Tiefe aufweist als die zweite.

3. Tragbarer Gegenstand nach Anspruch 1 oder 2, dadurch gekennzeichnet, daß die erste Ausnehmung (26) eine Tiefe (P) aufweist, die kleiner ist als die Summe der Dicke (e₁) des leitenden Substrats (11) und der Dicke (e₂) des dem leitenden Substrat zugeordneten, unter Wärmeeinwirkung schmelzbaren Bands (12).

4. Tragbarer Gegenstand nach Anspruch 1 oder 2, dadurch gekennzeichnet, daß der Freiwinkel und die Tiefe (P) der ersten Ausnehmung (26) so berechnet sind, daß das Volumen des unter Wärmeeinwirkung schmelzbaren Klebers aufgenommen wird, das dem Größenunterschied zwischen der Tiefe (P) der ersten Ausnehmung und der Dicke (e₁ + e₂) der Baugruppe (11, 12) aus Substrat und unter Wärmeeinwirkung schmelzbarem Band entspricht.

5. Tragbarer Gegenstand nach Anspruch 3 oder 4, dadurch gekennzeichnet, daß die Tiefe (P) kleiner ist als 0,05 bis 2 Hundertstelmillimeter.

6. Tragbarer Gegenstand nach Anspruch 3 oder 4, dadurch gekennzeichnet, daß die Tiefe (P) kleiner ist als 2 Hundertstelmillimeter.

7. Tragbarer Gegenstand nach einem der vorangehenden Ansprüche, dadurch gekennzeichnet, daß die integrierte Schaltung (13) in der zweiten Ausnehmung (27) mittels eines Elastomer versehenen halbschnellabbindenden Klebers befestigt ist.

8. Tragbarer Gegenstand nach Anspruch 7, dadurch gekennzeichnet, daß der Kleber ein Cyanoacrylat-Kleber ist.

9. Tragbarer Gegenstand nach Anspruch 7, dadurch gekennzeichnet, daß der Kleber ein Harz ist.

10. Tragbarer Gegenstand nach Anspruch 1, dadurch gekennzeichnet, daß das Substrat (11) in einer ersten Ausnehmung (26) mit Hilfe eines unter Wärmeeinwirkung schmelzbaren Klebers befestigt ist.

11. Tragbarer Gegenstand nach Anspruch 1, dadurch gekennzeichnet, daß die Enden der Bögen eine Kontur begrenzen, deren Abmessungen im Verhältnis zu den Abmessungen der durchschnittlichen Konturlinie um einen Wert zwischen 1 Tausendstel und 10 Tausendstel verringert sind.

12. Tragbarer Gegenstand nach Anspruch 11, dadurch gekennzeichnet, daß die Abmessungen vorzugsweise um 3 Tausendstel verringert sind.

13. Verfahren zur Herstellung der tragbaren Gegenstände nach einem der vorangehenden Ansprüche, gekennzeichnet durch folgende Schritte:
- Messen der Dicke des den Kartenträger (2) bildenden Materials mit Hilfe eines Laserstrahls, in welchem eine Vertiefung (26, 27) ausgehöhlt werden muß, um die Mikromodul-Baugruppe (11, 12, 13) aufzunehmen;
- Berechnen der Strecke des Absenkens einer Frässpindel (52) bezüglich einer festgelegten Ebene bestehend aus der oberen Fläche des die Karte bildenden Trägers (2);
- Steuern der Verschiebungen eines Schwalbenschwanz-Winkelfräsers (53) für, dessen Schwalbenschwanz dem Freiwinkel der Vertiefung (26, 27) entspricht, um die als Aufeinanderfolge von aneinanderstoßenden Bögen gestaltete Kontur (261, 271) zu bilden;
- Kleben der Mikromodul-Baugruppe (11, 12, 13) auf den Träger (2).

14. Verfahren nach Anspruch 13, dadurch gekennzeichnet, daß der Schritt des Klebens einen Schritt des Auftragens einer bestimmten Menge des halbschnellabbindenden Klebers in der zweiten Ausnehmung (27) der Vertiefung umfaßt, um das Befestigen der integrierten Halbleiterschaltung (13) der Mikromodul-Baugruppe zu sichern.

15. Verfahren nach Anspruch 13 oder 14, dadurch gekennzeichnet, daß der Schritt des Klebens zudem einen Schritt des ErWärmens des leitenden Substrats (11) umfaßt, der voneinander elektrisch isolierte Zonen enthält und in einem den Halbleiter (13) umgebenden Teil mit einem unter Wärmeeinwirkung schmelzbaren Band (12) versehen ist.

16. Verfahren nach einem der Ansprüche 13 bis 15, dadurch gekennzeichnet, daß es vor dem Befestigen der integrierten Halbleiterschaltung (13) einen Schritt enthält, bei dem ein unter Wärmeeinwirkung schmelzbares Band (12), das mit Einschnitten versehen ist, die groß genug sind, um den Halbleiter (13) zu umgeben, auf dem leitenden Band aufgetragen wird, das eine Aufeinanderfolge von ausgestanzten leitenden Substraten (11) aufweist, wobei jedes Substrat mit einem Halbleiter elektrisch verbunden ist, und einen weiteren Schritt, bei dem die Mikromodul-Baugruppe abgetrennt wird, um sie in die Vertiefung des Trägers (2) einzusetzen.

17. Verfahren nach Anspruch 16, dadurch gekennzeichnet, daß der Schritt des Abtrennens der Mikromodul-Baugruppe (11, 12, 13) mit Hilfe eines Stempels mit gewölbter Oberfläche durchgeführt wird, wobei der Stempel mit einer Matrize zusammenwirkt, deren Öffnung durch eine Aufnahmeschale (81) zur Aufnahme des mechanisch verformten Mikromoduls verschlossen ist.

18. Verfahren nach einem der Ansprüche 16 oder 17, dadurch gekennzeichnet, daß die auf einer Schale (81) positionierte Mikromodul-Baugruppe einer Station zum Einsetzen in die Vertiefung (26, 27) des Trägers (2) zugeführt wird, um durch Betätigen des Schiebers (82) das Absenken des Mikromoduls in die gegenüber der konkaven Form der Schale angeordnete Vertiefung zu sichern, wobei die Abmessungen der Schale kleiner sind als die Abmessungen der Kontur der im Träger (2) vorgesehenen Aufnahme.

## Claims

1. Portable object comprising, in a support (2) made of plastic material, a cavity (26, 27) intended to receive a micromodule assembly comprising a conducting pellet (11) comprising zones that are electrically insulated from one another and to which is electrically connected an integrated circuit (13) with semiconductor comprising at least one memory function, characterised in that the cavity (26, 27) has a contour (261, 271) shaped as a succession of contiguous arcs of small amplitude relative to an average contour line with a shape adapted to the shape of the pellet, said contour of the cavity forming a relief angle of 10 degrees relative to a direction perpendicular to the surface of the support (2), this relief angle widening the cavity towards the bottom.

2. Portable object according to Claim 1, characterised in that the cavity (26, 27) comprises two recesses, concentric or otherwise, of which a first (26), with a surface area greater than the second, has a depth less than the second one.

3. Portable object according to Claim 1 or 2, characterised in that the first recess (26) has a depth (P) less than the sum of the thickness (e₁) of the conducting pellet (11) and the thickness (e₂) of the heat-fusible strip (12) associated with the conducting pellet.

4. Portable object according to Claim 1 or 2, characterised in that the angle of the relief and the depth (P) of the first recess (26) are calculated so as to absorb the volume of heat-fusible glue corresponding to the difference in dimension between the depth (P) of the first recess and the thickness (e₁ + e₂) of the pellet/heat-fusible strip assembly (11, 12).

5. Portable object according to Claim 3 or 4, characterised in that the depth (P) is less by 0.05 to 2 hundredths of a millimetre.

6. Portable object according to Claim 3 or 4, characterised in that the depth (P) is less by 2 hundredths of a millimetre.

7. Portable object according to one of the preceding claims, characterised in that the integrated circuit (13) is fixed in the second recess (27) by a semi-fast-setting glue loaded with elastomer.

8. Portable object according to Claim 7, characterised in that the glue is of the cyanacrylic type.

9. Portable object according to Claim 7, characterised in that the glue is a resin.

10. Portable object according to Claim 1, characterised in that the pellet (11) is fixed in a first housing (26) by a heat-fusible glue.

11. Portable object according to Claim 1, characterised in that the ends of the arcs define a contour, the dimensions of which, relative to the dimensions of the average line of contour, are reduced by a value comprised between 1/1000th and 10/1000ths.

12. Portable object according to Claim 11, characterised in that the dimensions are reduced preferably by 3/1000ths.

13. Method of manufacturing portable objects according to one of the preceding claims, characterised in that it comprises:
- a step of measuring, with the aid of a laser beam, the thickness of material forming the support (2) of the card in which a cavity (26, 27) has to be hollowed out in order to receive the micromodule assembly (11, 12, 13);
- a step of calculating the distance of descent of a milling spindle (52) relative to a fixed plane constituted by the upper surface of the support (2) forming the card;
- a step of controlling the displacements of a dovetail milling cutter (53), the dovetail of which corresponds to the angle of the relief of the cavity (26, 27) so as to form the contour (261, 271) shaped as a succession of contiguous arcs;
- a step of gluing the micromodule assembly (11, 12, 13) to the support (2).

14. Method according to Claim 13, characterised in that the gluing step comprises a step of depositing a defined quantity of semi-fast-setting glue in the second recess (27) of the cavity in order to ensure the fixing of the integrated circuit (13) with semiconductor of the micromodule assembly.

15. Method according to Claim 13 or 14, characterised in that the gluing step further comprises a step of heating the conducting pellet (11) comprising zones electrically insulated from one another and provided with a heat-fusible strip (12) in a portion surrounding the semiconductor (13).

16. Method according to one of Claims 13 to 15, characterised in that it comprises, prior to the fixing of the integrated circuit (13) with semiconductor, a step of depositing a heat-fusible strip (12), provided with cut-outs big enough to surround the semiconductor (13) on the conducting strip, which comprises a series of cut-out conducting pellets (11), each of which is electrically connected to a semiconductor and a step of separating the micromodule assembly for positioning in the cavity of the support (2).

17. Method according to Claim 16, characterised in that the step of separating the micromodule assembly (11, 12, 13) is performed with the aid of a punch with a domed surface co-operating with a die, the opening of which is obstructed by a receiving cup (81) intended to receive the mechanically deformed micromodule.

18. Method according to one of Claims 16 or 17, characterised in that the micromodule assembly positioned on a cup (81) is brought to a station for positioning in the cavity (26, 27) of the support (2) so as to ensure, by action of the pusher (82), the descent of the micromodule into the cavity arranged opposite the concavity of the cup, of a dimension smaller than the dimension of the contour of the housing provided in the support (2).
